# EUROPEAN PATENT SPECIFICATION

(11) **EP 2 983 976 B1**
(45) Date of publication and mention of the grant of the patent: **12.06.2019**
(21) Application number: 13731503.2
(22) Date of filing: 12.04.2013
(51) Int. Cl.: B63B 3/44, B63B 35/44, B63B 39/06, B63B 39/00, B63B 3/14, B63B 1/06

(54) **SHIP FOR LONG PERIOD STATION KEEPING AT SEA, IN PARTICULAR DRILLSHIP**
SCHIFF FÜR LANGE STILLSTANDSZEIT AUF SEE, INSBESONDERE BOHRSCHIFF
NAVIRE POUR MAINTIEN DE LA POSITION EN MER SUR UNE LONGUE DURÉE, EN PARTICULIER NAVIRE DE FORAGE

(43) Date of publication of application: 17.02.2016
(73) Proprietor: Fincantieri Oil & Gas S.p.A., 34121 Trieste (IT)
(72) Inventor: SCHERL, Gianni, I-34121 Trieste (IT)
(74) Representative: Zanettin, Gianluigi
(86) International application number: PCT/IT2013/000107
(87) International publication number: WO 2014/167591

(56) References cited:
- US-A- 3 934 531
- US-A- 4 003 325
- US-A1- 2006 169 191
- US-B1- 6 719 496

## Description

### Field of application

The present invention relates to a ship for long period stationing at sea.

In particular the ship according to the present invention may be a drillship. Such drillship is destined to operate, in particular, in deep waters (over 450m) and ultra deep waters (over 1,500m) for localising, exploring and exploiting deposits of hydrocarbons or other energy and mineral resources (see, for example, US 6 719 496 B1).

The ship which the present invention relates to may be made in particular as a pipe-laying ship, a cable-laying ship, a wind-farm ship, a oceanographic research ship, a seismographic prospecting ship, an offshore production ship (FPSO), a floating industrial processing ship (for preparing and canning fish) or any other type of ship which must station in the same position at sea for long periods to perform its operations.

### State of the art

The term "ship for long period stationing at sea" is understood to mean a ship for which almost all the useful life is spent maintaining the same position in the sea, with movements from one place to another limited to a minimum.

A typical example is drillships. This is a class of offshore units specialised in drilling underwater oil wells at over 3000 m deep in the sea bed. These are characterised by a derrick, normally installed halfway along the ship, which suspends the drill strings and manoeuvres them through an aperture in the hull known in the jargon as "moonpool". These units typically operate to locate and prepare oil wells for future use by other offshore units specialised in the production of natural gas and crude oil. Consequently almost the entire life of these ships is spent maintaining the same vertical position over the well head and movements from one place to another are limited to a minimum.

The commercial value of a shipping unit for long period stationing at sea is established in particular by its seaworthiness since a naval unit subject to limited movements and accelerations makes it possible to reduce the number of days wasted due to swell, to a minimum. This is particularly relevant to drillships.

To tackle and optimise the requirement to dampen ship movements, naval designers adopt a series of technical expedients, ranging from the shape of the hull with a symmetrical distribution of volumes at bow and stern as far as stabiliser fins.

Generally, the hydrodynamic shapes of the ship hulls are typically directed at optimising propulsion to achieve the maximum speed at the lowest propulsion power.

Diversely, for ships designed to spend prolonged periods stationary in the sea the most advantageous feature is that of maximising seaworthiness by minimising rolling, pitching and heaving motions while operating at a standstill in the midst of the sea.

The shapes of hull fulfilling such purpose differ greatly from those optimised for speed performance, proving stockier and, in particular, symmetrical in the shape of the bow and stern as far as possible. Such symmetry permits a reduction of the vertical thrusts and a more even transit of the wave over the hull. An example of such a high-speed, high-capacity cargo carrier provided with an elongated flat bottom conceived for improving efficiency and speed while permitting navigation in shallow harbours without penalizing its capability during voyage in high seas is disclosed in US 3 935 531 A.

Moreover, the transversal cross-sections generally have a V-cross-section so as to reduce to a minimum the risk of slamming, that is to say the violent slamming caused by the waves on the flat, sub-horizontal areas of the flared shape of the bow and flat stern bottom typical of fast ships.

The degrees of freedom, movements of the ship, extend over 6 degrees of freedom: three are linear (translation, drift, heave) and three angular (yaw, roll, pitch). When designing the ship, ship designers focus on all these movements with an eye to keeping them under control and accentuating, with particular expedients, intervention on the movements which are particularly troublesome to the specific operations of the unit.

For example in drillships the positioning of the bores at the center of buoyancy (through which the rotation axis which the pitching movement develops around passes) makes it possible to minimise the vertical component due to the pitching rotation.

Active or passive systems may be adopted to reduce the rolling movement which are more or less effective and expensive.

For example some ships are provided with a ballast water tanks positioned on the side platings. The ballast water moves from one side plating to the other by means of an active pump which synchronises the movement of the water in an asynchronous manner with that of the ship.

This dampening of the roll can also be achieved with the more costly retractable stabilizer fins fitted mainly on fast, commercially rich ships. Stabilizer fins exploit the dynamic lift force caused by the pressure of the water incident on a fin suitably inclined in relation to the flow. When the ship is still they have practically no effect.

On drillships it is customary to dampen the roll with stabiliser fins inasmuch as economical and passive. Their efficacy is limited to dissipating energy by creating whirling while the ship is rolling.

All the aforementioned systems combine characteristics of efficiency with limitations of the results which can be achieved as a result of the physical constraints dictated by dimensions and costs of the expedient adopted. For example, in order to have acceptable dimensions, the retractable stabiliser fins do not work at speeds of less than approximately 15 knots. The stabiliser fins give their maximum contribution if fitted at the maximum width of the ship (maximum arm) and their wet surface negatively influences the ship speed.

Up to today devices enabling a specific dampening of the pitching and heaving movements have not been proposed.

### Presentation of the invention

Consequently, the purpose of the present invention is to eliminate the drawbacks of the prior art mentioned above, by making available a ship for long period stationing at sea, which has an improved response in terms of dampening the pitching and heaving motions thus offering greater seaworthiness in the stationing phase.

A further purpose of the present invention is to make available a ship for long period stationing at sea which has an improved response in terms of dampening the pitching and heaving motions thus offering greater seaworthiness in the stationing phase by means of economically not expensive devices.

A further purpose of the present invention is to make available a ship for long period stationing at sea which overall is not more expensive to build than the current ship for long period stationing at sea.

### Brief description of the drawings

The invention is defined by the technical features set forth in independent product claim 1; the technical characteristics of the invention, according to the aforesaid purposes, can be seen clearly from the contents of the claims and the advantages of the same will be more clearly comprehensible from the detailed description below, made with reference to the attached drawings, showing one or more embodiments by way of non-limiting examples, wherein:
- Figure 1 shows a perspective view from the bow of a particular embodiment of a ship according to the invention, used as a drillship;
- Figure 2 is a side view of the ship shown in Figure 1;
- Figure 3 shows the construction plan of the ship in figure 1, according to a side view of the fore area;
- Figure 4 shows the construction plan of the ship in figure 1, according to a perspective view from the bottom;
- Figure 5 shows the construction plan of the ship in figure 1, according to a bow frontal view;
- Figure 6 is a side view only of the hull of the ship in Figure 1;

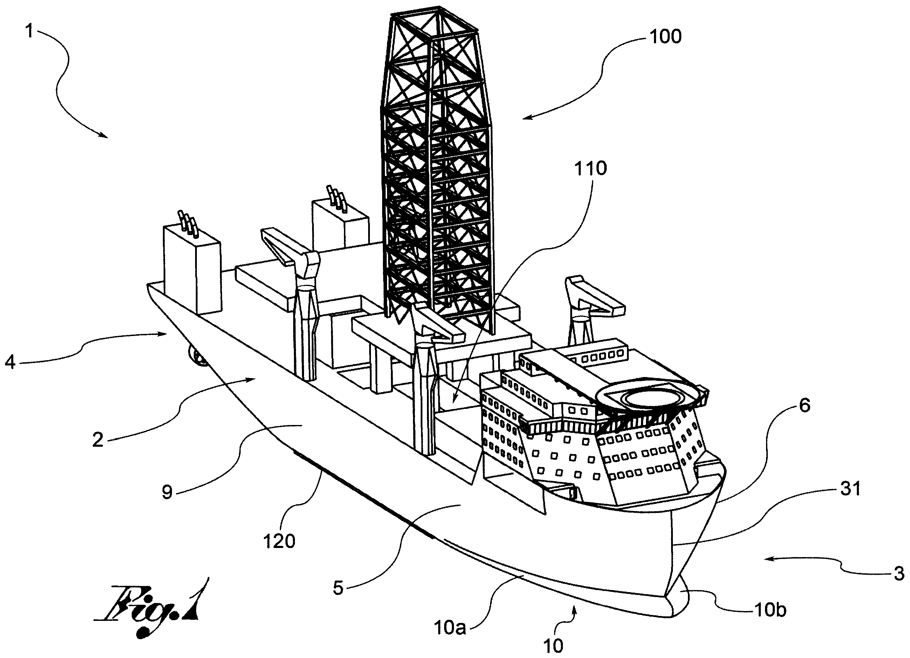

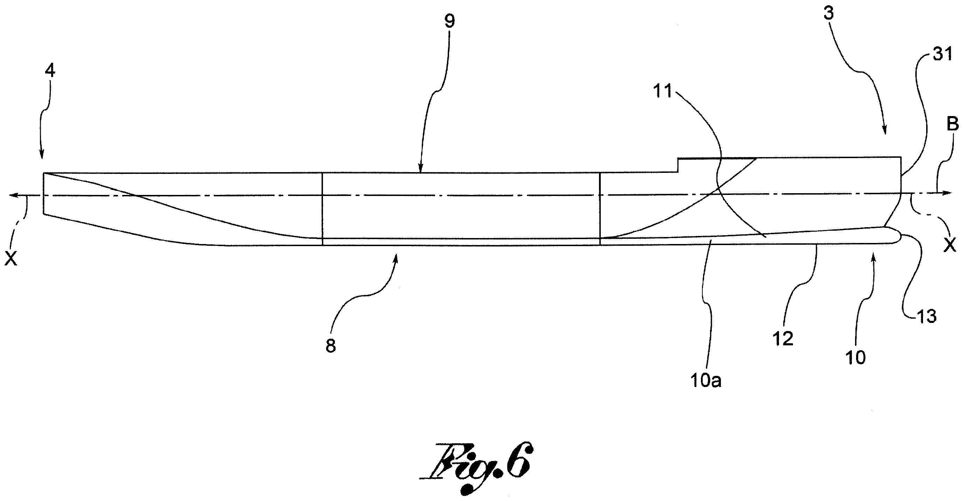

- Figure 6 is a side view only of the hull of the ship in Figure 1;

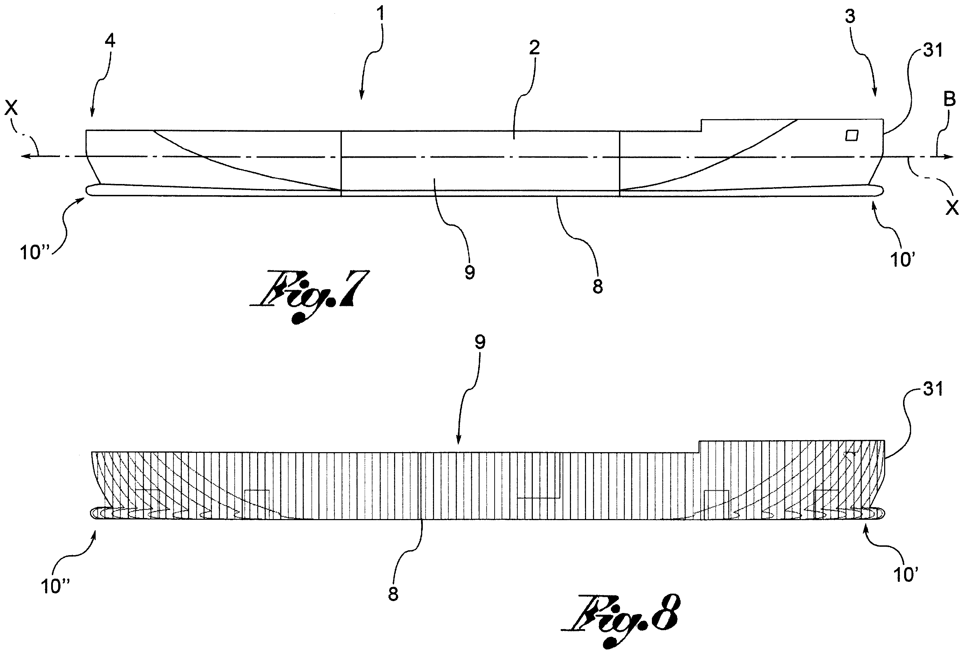

- - Figure 7 is a side view only of the hull of the ship according to an alternative embodiment of the invention;
- Figure 8 shows the construction plan of the ship in figure 7, according to a side view;

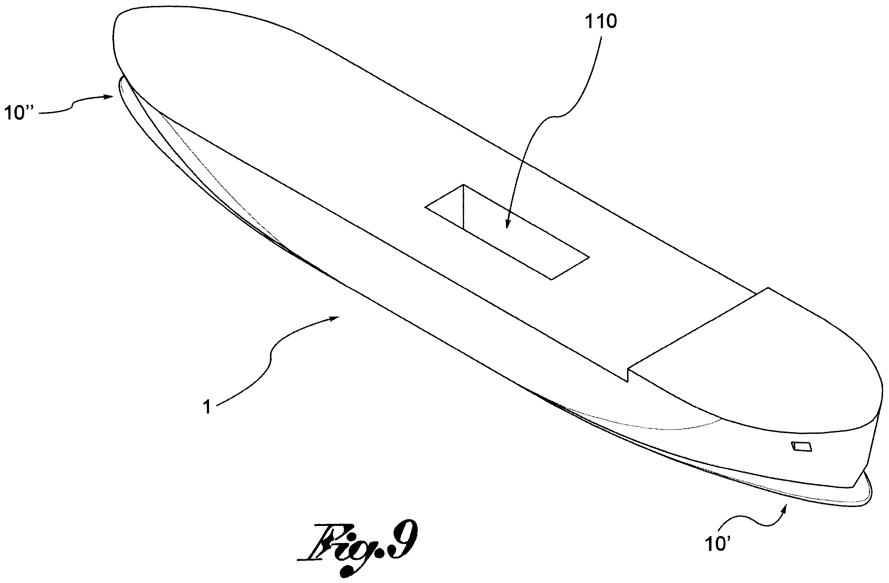

- Figure 9 is a perspective schematic view from above of the hull in Figure 7; and

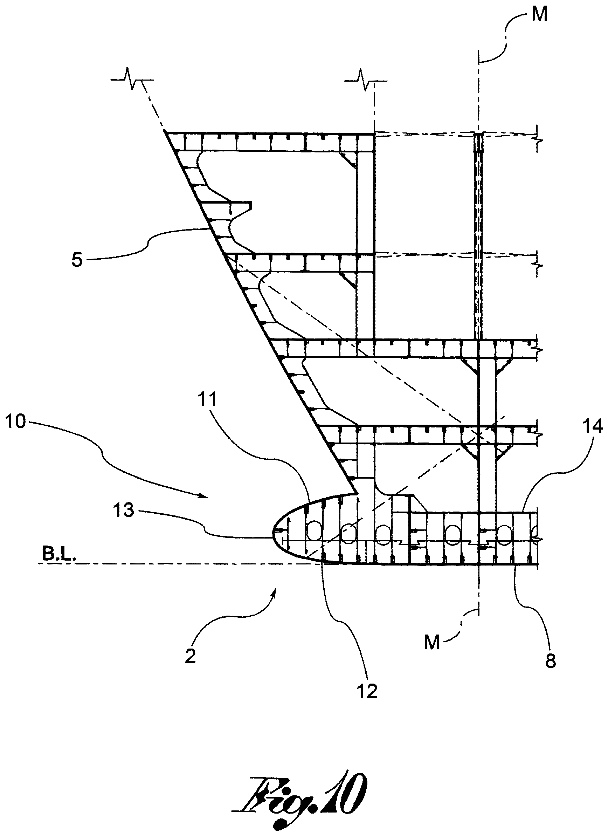

- Figure 10 shows a detailed transversal cross-section view of the inner structure of the hull of the fore area of a ship according to a particular embodiment of the present invention.

### Detailed description

With reference to the appended drawings, reference numeral 1 globally denotes a ship for long period stationing at sea according to the invention.

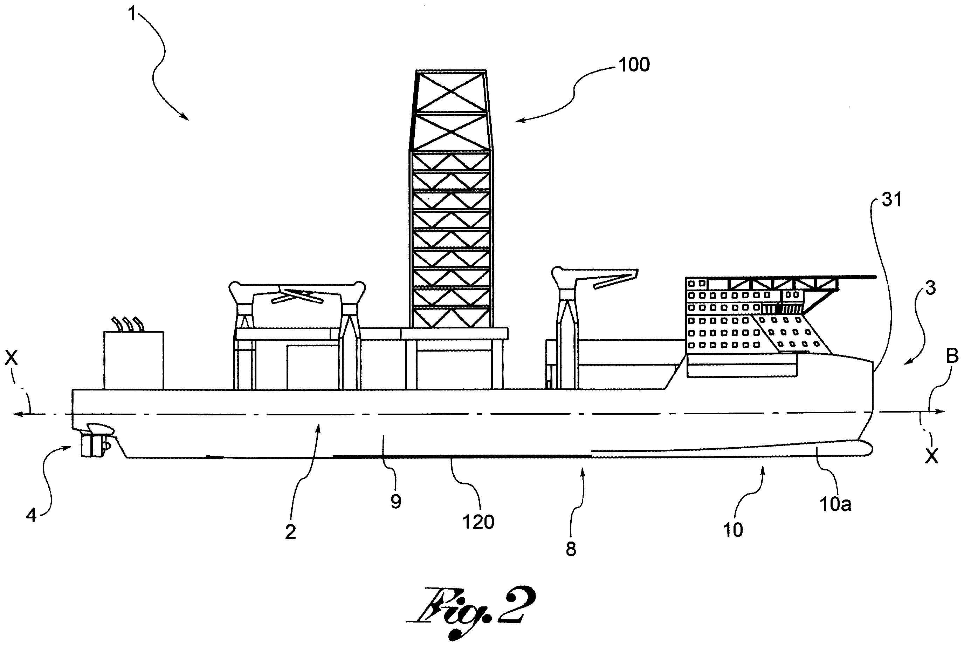

In particular as shown in Figures 1 and 2, a ship 1 according to the invention may be used as a drillship and thus be provided, in particular, with a vertical derrick 100 and an opening in the hull 110 (in jargon "moonpool" made on the vertical of the derrick.

Here and henceforth in the description and the claims, reference will be made in addition to the ship 1 in conditions of use. References to an upper or lower position or horizontal or vertical direction should therefore be understood in this sense.

According to a general embodiment of the invention, the ship for long period stationing at sea 1 comprises a hull 2 which extends along a longitudinal axis X between a bow 3 and a stern 4.

As may be observed in the appended drawings, the hull 2 comprises at least one protuberance 10 having a flattened shape which forms a shelf extending from the hull in the direction of the width of the ship.

The protuberance 10 is positioned at the bow and extends in a longitudinal direction astride the bow of the ship 1 towards the midship, at least partially encompassing the fore part of the hull on both sides 5 and 6 with two separate branches 10a and 10b.

In particular as shown in the appended drawings, the protuberance 10 is positioned astride the stem 31.

As shown in particular in Figures 2, 6 and 7, the protuberance 10 is positioned in relation to the hull 2 so as to always be below the waterline B of the ship.

Functionally, the protuberance 10 poses a resistance to the movements in vertical direction of the ship 1 generated by the swell, in this case dampening the pitching and heaving motions.

The dynamic dampening effect is generally obtained in a fluid by making a body move in the viscous fluid and producing, by suitable shaping, as many vortexes as possible. The vortexes are the real cause of dissipation of the energy, transforming the kinetic energy of movement in thermal energy exchangeable with the viscous fluid.

The movements of the ship in the 6 degrees of freedom are caused by the wave perturbation of the surface of the sea which transfers energy to the immersed body in a dynamic manner and creates imbalances of hydrostatic thrust in relation to a perfectly even surface. The transfer of dynamic energy is due to the impact of the molecules of water which move along circular trajectories inside the wave profile.

Since the circular trajectories of the molecules of water are characterised by decreasing diameters as the depth of immersion increases, the wave profile also proves progressively reduced with the increase in immersion until it is annulled at a certain distance from the open surface of the sea.

The protuberance 10 must operate in this zone, at the maximum possible distance from the open surface of the sea, so as not to be subject to rotatory movements of great breadth on the surfaces (visually perceptible waves).

Preferably, the highest part of the protuberance 10 is at not less than 5 metres below the waterline B of the ship.

Operatively, while the ship is pushed to move by the surface perturbation acting on the portion of volume of the hull alternately wet or exposed to the air, the protuberance 10 dissipates energy in relatively still water, moving vertically.

From a functional point of view, the flattened protuberance 10 may thus be considered a passive expedient for dampening the pitching and heaving moitions.

Advantageously, in addition to the protuberance 10, the ship 1 may be provided with other expedients, passive or active, for dampening the ship motions, known in the state of the art. In particular, the ship 1 may be provided with stabiliser fins, as shown in Figure 1, where they are denoted by reference numeral 120. Such fins 120 are preferably positioned in the midship part of the hull, in particular in the section of cylindrical body, if present.

It should be noted in this context that the flattened protuberance 10 according to the present invention has a conformation and hydrodynamic functioning entirely different from the traditional hydrodynamic bulbs.

In brief, the traditional hydrodynamic bulb acts on the wave formation of a ship moving at a considerable speed reducing the resistance to advancement. For such reason the traditional bulb has a shape which is profiled, with a very limited longitudinal extension and must lap the surface of the sea.

The resistance to advancement of a ship may be divided theoretically into two main components:
-A) the viscous component which takes into consideration the friction forces developed by the flowing of the fluid on the wet surface of the ship's bottom, and thus depends exclusively on the speed to the second power and on the effective extension of the wet surface.
-B) the pressure component caused by the formation of waves on the surface separating the water and the atmosphere. Since the hydrostatic pressure of the atmosphere is constant, the wave ripples reflect the pressure field surrounding the ship's bottom in its forward movement; the field depends mainly on the speed and distribution of volumes of the ship's bottom.

Normally at low speeds in relation to the length of the ship, viscous resistance prevails, while as the speed of advancement increases, despite the viscous resistance increasing quadratically, the pressure resistance due to the formation of waves, which grows exponentially to a cubic or even higher power, prevails.

The hydrodynamic bow bulb (introduced at a widespread level in the mid - 1900s). aims to contrast wave resistance. The functioning of a traditional hydrodynamic bulb is based on its capacity to create a wave perturbation in counter-phase with the wave created by the ship's bottom at the bow of the ship. For every ship and every given speed there is an optimised bulb which is individually designed in a test tank acting on its shape characteristics such as length , profile, distribution of volumes in a longitudinal and vertical direction. A traditional hydrodynamic bulb must be completely submerged, but diversely from the protuberance 10 must be able to lap the surface of the sea to create an efficacious wave perturbation.

Conversely, the protuberance 10 according to the present invention has a flattened shape and presents a considerable extension in a longitudinal direction astride the bow or stern end of the ship 1, encompassing at least partially the fore part of the hull on both sides 5 and 6. Moreover, as already said and as illustrated in particular in Figures 2, 6 and 7, the protuberance 10 is positioned in relation to the hull 2 so as to always be below the waterline B of the ship 1.

According to an embodiment not illustrated in the appended Figures, the protuberance 10 may be positioned at the stern rather than at the bow. In this case the protuberance extends in a longitudinal direction astride the stern end of the ship, encompassing at least partially the aft part of the hull on both sides. This solution is not preferred inasmuch as requiring significant modifications in the positioning of the propulsion systems. This construction limit is not however present in the embodiment which provides for the protuberance only in the fore part, as illustrated in the appended drawings.

According to the embodiment illustrated in Figures 7, 8 and 9, the ship may comprise a first protuberance 10' at the bow and a second protuberance 10" at the stern. This may make it possible to further increase the seaworthiness of the ship 1 compared to the solutions with the protuberance at the bow or stern only.

Preferably, as shown in Figures 7, 8 and 9, the first 10' and the second protuberance 10" are identical. Even more preferably the ship 1 has a hull with a ship's bottom shapes having a symmetrical distribution of volumes at bow and stern.

According to the embodiments illustrated in the appended Figures, the protuberance 10 defines a top surface 11, which is substantially facing upwards, in other words in conditions of use faces towards the surface of the sea. In particular, such top surface 11 may be at least partially flat.

According to the embodiments illustrated in the appended Figures, the protuberance 10 defines a bottom surface 12, which is substantially facing downwards, in other words in conditions of use faces towards the sea bed. In particular, such bottom surface 12 may be at least partially flat.

Functionally, such two surfaces, top 11 and bottom 12 oppose the movements in a vertical direction of the ship 1 generated by the swell, in this case dampening the pitching and heaving movements.

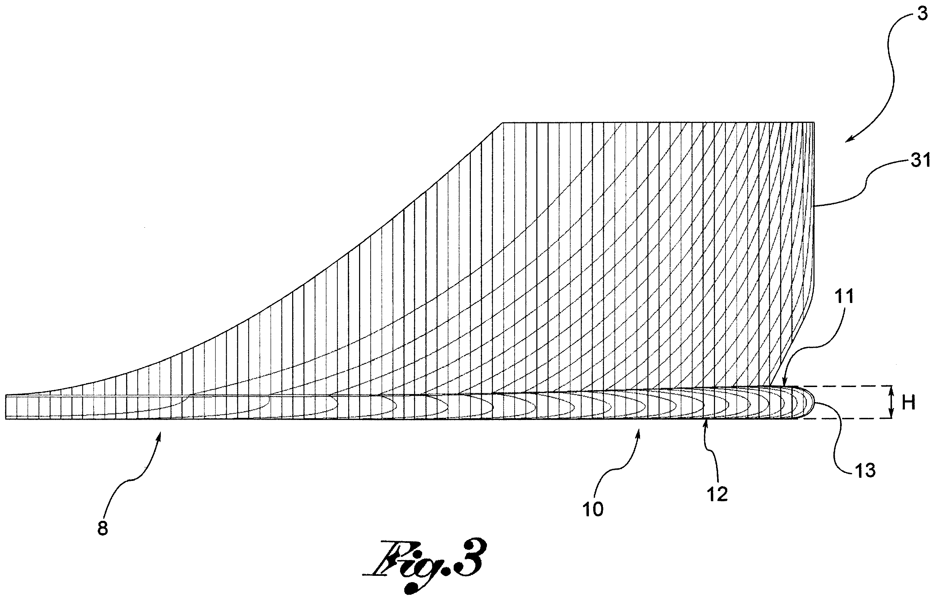

Preferably, as shown in particular in Figure 3, the protuberance 10 has a rounded surface 13 which connects the top surface 11 to the bottom surface 12.

In particular the bottom surface 12 of the protuberance 10 connects to the bottom 8 of the ship.

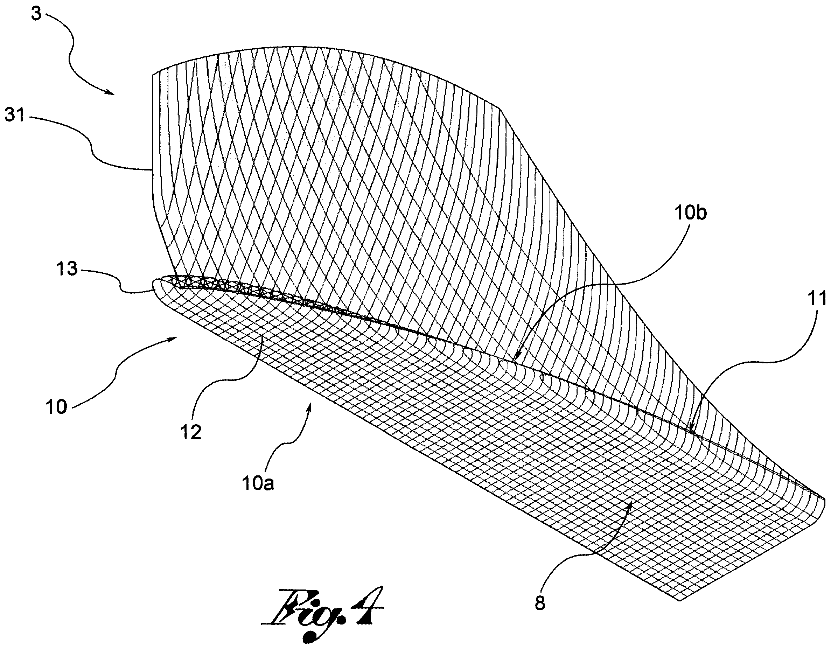

Preferably, the bottom 8 of the ship 1 is flat, as shown in Figures 2, 4, 5, 7 and 8. In this case, preferably, the bottom surface 12 of the protuberance 10 connects to the bottom 8 of the ship.

In particular, each branch of the protuberance 10 has a predefined height H comprised between the top surface 11 and the bottom surface 12.

The height H of the protuberance 10 at both branches 10a and 10b may vary along the longitudinal extension of the protuberance. In particular, the height H of the protuberance 10 increases as it moves towards the bow or stern end as shown in Figure 3.

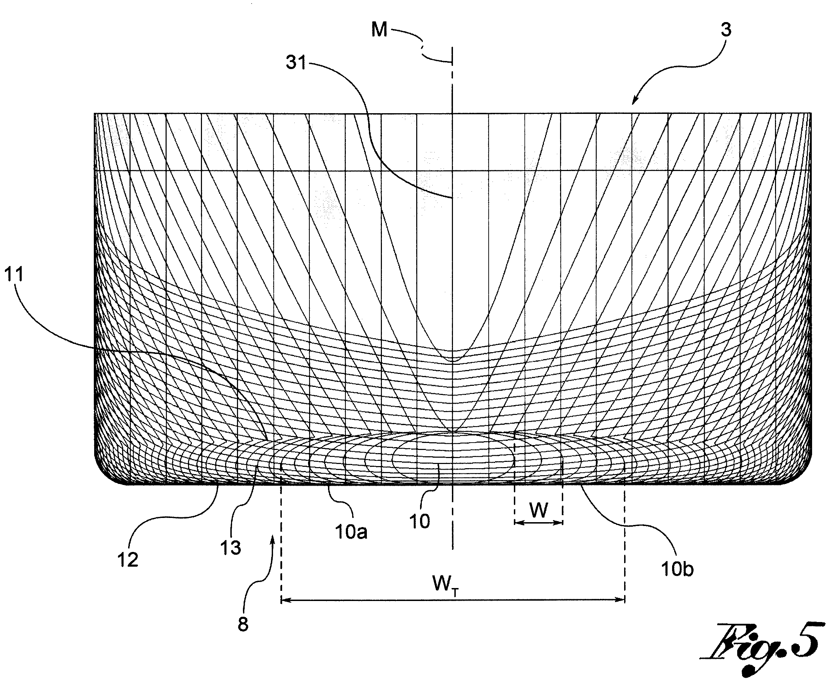

In particular each branch 10a and 10b of the protuberance 10 has a predefined width W in the direction of the width of the ship 1. By width of the individual branch (or of the shelf) the distance between the outermost rim of the protuberance in the width direction of the ship and the point where it connects to the hull is meant, as shown in Figure 5.

Such width W may vary along the longitudinal extension of each branch of the protuberance. In particular, according to the invention, the width W increases as it moves towards the bow or stern end.

Functionally, the greater the extension of the top surface 11 and of the corresponding bottom surface 12 of the protuberance 10, that is of the surface which mainly contributes to opposing vertical movements, the greater the dampening effect of the vertical movements. In this sense, it is preferable that the protuberance 10 in the two branches 10a and 10b is particularly extensive both in a longitudinal and transversal direction.

Preferably, the protuberance 10 extends symmetrically in relation to the longitudinal axis X of the ship 1. The two branches of the protuberance are therefore symmetrical to the longitudinal extension axis X of the ship 1. In particular, the two branches thus have the same shape, the same thicknesses S and the same widths in relation to the transversal cross-section planes, orthogonal to such longitudinal axis X.

As shown in Figures 1, 4 and 5, the two branches 10a and 10b of the protuberance 10 connects to each other at the centreline M of the ship 1 at the bow or stern.

Preferably, as shown in particular in Figures 2, 3, 7 and 8, the two branches 10a and 10b of the protuberance 10 project at least in relation to the base of the stem or of the stern-post. This way the shelf formed by the protuberance 10 not only extends along the sides, but frontally and rearwards of the ship, increasing the dampening effect of the vertical movements.

The profile of the bow or stern may start from the top surface 11 of the protuberance with inclinations which can be varied depending on the various needs dictated by the specific application. In particular the stem may have various conformations and patterns. The stem may even be vertical and in particular pass through the bow end of the protuberance, where the two branches connect to each other. In this case the shelf formed by the protuberance is divided into two separate parts and the protuberance does not project in relation to the stem, with reduction of the surfaces opposing the vertical movements. An analogous situation may also occur at stern, if a protuberance 10 is provided there.

Advantageously, the protuberance 10 has a maximum longitudinal extension which does not exceed the point of maximum length of the ship at bow or at stern to prevent dangerous protrusions beyond the ship's main dimensions.

In particular as shown in Figures 6 and 8, the hull 2 comprises centrally a section of cylindrical body 9, at which the ship 1 has its maximum extension in width. Preferably, the two branches 10a and 10b of the single protuberance 10 extend in a longitudinal direction towards midship at least as far as such section of cylindrical body 9.

In particular as shown in Figure 5, each branch 10a and 10b of the protuberance 10 connects to the section of cylindrical body 9. In this case, the width W of each branch progressively decreases in a longitudinal direction from bow/stern to midship, as the width of the ship increases in the fore/aft area, as far as disappearing at the point of the section of cylindrical body 9.

According to embodiments not illustrated, the protuberance 10 may not necessarily connect to the section of cylindrical body and thus also project in relation thereto, therefore beyond the maximum width of the ship.

In particular as shown in Figure 10, (where the baseline of the ship is indicated as B.L.) the ship 1 may comprise a double bottom 14. Preferably, the protuberance 10 is structurally connected and integrated with the double bottom 14 as shown for example in Figure 10.

By way of example, a description of a particular embodiment of the protuberance with reference to the hull of a ship according to the invention will now be provided, having the following dimensions: maximum length approximately 210 m, maximum width approximately 40 m, maximum immersion approximately 11 m. the protuberance 10 is positioned in relation to the hull in such a way that the highest part of said protuberance (i.e. the top surface) is at 7-8 m below the waterline B.

The total length of the ship, from bow to stern, is divided into 20 equal parts numbered from 0 (stern end) to 20 (bow end). Considering the overall dimensions in width from one branch to the other (along a transversal cross-section plane), the protuberance 10 has the following overall relative extension values in width, indicated as WT in relation to the width of the ship: at division 13 (fore end of the cylindrical body) at full ship width, at division 15 the WT width is approximately 90%, at division 17 approximately 75%, at division 19 approximately 40%, at division 19 approximately 30%, and at 20 it becomes 0% coinciding with the ship's centreline.

Continuing with the example given above the protuberance has a height H also varying along its longitudinal extension: starting from the stern, at division 13, at the same height as the double bottom (protuberance/hull intersection line) and increasing towards the bow in a practically linear manner as far reaching about one and a half times the starting height at division 20.

If one considers the transversal cross-section, the protuberance has a flat bottom area from which a curved line starts at zero ceiling and which extends in a parabolic shape to be incident at the top on the surface of the hull with a sub-horizontal ceiling, as shown in Figure 5.

Still remaining in the specific example give above, in absolute values the protuberance 10 has in particular the following dimensions:
- longitudinal extension of the single branch approximately 70 m;
- extension in height H of the single branch: starting from a minimum height of 2 m at division 13 to reach the maximum height of 3 m at division 20;
- extension in width W of the single branch (width of the shelf or of the single branch is taken to mean the distance between the outermost rim of the protuberance in the width direction of the ship and the point where it connects to the hull): at division 13 (fore end of the cylindrical body) at full ship width, it is 0 metres since it does not exceed the maximum ship width; at division 15 it is approximately 0.8 m; at division 17 it is approximately 1.7 m; at division 19 it is approximately 4 m; at division 19 it is approximately 5 m; at division 20 it is approximately 0 m, coinciding with the ship centreline.

Remaining in the specific example described above, considering the overall dimensions in width from one branch to the other (along a transversal cross-section plane), the protuberance has the following overall extension in width, indicated as WT in Figure 5: at division 13 (fore end of the cylindrical body) at full ship width, about 40 m; at division 15 approximately 36 m; at division 17 approximately 30 m; at division 19 approximately 16 m; at division 19 approximately 12 m; at 20, 0 m, coinciding with the ship centreline.

The invention permits many advantages to be obtained, some of which already pointed out above.

The ship for long period stationing at sea according to the invention has an improved dynamic response in terms of dampening the pitching and heaving movements thus offering greater seaworthiness in the stationing phase. This is essentially related to the fact that it is provided with an expedient for dampening the ship movements specifically designed for dampening the pitching and heaving motions.

The pitching and heaving dampening device, (i.e. the protuberance 10) which the ship 1 is fitted with, is economically inexpensive in that it does not require particular and complex construction expedients. The fact that this is a passive dampening expedient is to be emphasised in that it does not require adjustment and control devices. The ship for long period stationing at sea according to the invention thus offers an improved dynamic response in terms of dampening the pitching and heaving motions with economically inexpensive or constructionally simple devices.

The ship 1 according to the invention offers an improved dynamic response in terms of dampening the pitching and heaving movements without being constructionally more expensive than the current ships for long period stationing at sea.

The invention thus conceived thereby achieves the intended objectives.

Obviously, its practical embodiments may assume forms and configurations different from those described while remaining within the sphere of protection of the invention, so that reference should be made to the appended claims defining the scope thereof.

Furthermore, the dimensions, shapes and materials used may be varied as required.

## Claims

1. Ship for long period stationing at sea, comprising a hull (2) which extends along a longitudinal axis (X) between a bow (3) and a stern (4), **characterised by** the fact that the hull (2) comprises at least one protuberance (10) having a flattened shape which forms a shelf extending from the hull in the direction of the width of the ship, said protuberance being positioned at the bow or at the stern and extending in a longitudinal direction astride the bow or stern of the ship (1) towards the midship, at least partially encompassing the fore or aft part of the hull on both sides (5 , 6) with two separate branches (10a, 10b), each branch (10a, 10b) of the protuberance (10 having a predefined width (W) in the direction of the width of the ship (1), wherein said width (W) increases as it moves towards the bow or stern end, said protuberance (10) being positioned in relation to the hull (2) so as to always be below the waterline (B) of the ship and posing resistance to the movements in vertical direction of the ship (1) at sea generated by the swell, thus dampening the pitching and heaving movements.

2. Ship according to claim 1, wherein the highest part of the protuberance (10) is at not less than 5 metres below the waterline (B) of the ship.

3. Ship according to claim 1 or 2, wherein said protuberance (10) defines a top surface (11), which is substantially facing upwards, and a bottom surface (12), which is substantially facing downwards.

4. Ship according to claim 3, the protuberance (10) has a rounded surface (13) which connects the top surface (11) to the bottom surface (12).

5. Ship according to claim 3, wherein the protuberance (10) has a predefined height (H) comprised between the top surface (11) and the bottom surface (12) and wherein the height (H) of the protuberance (10) increases as it moves towards the bow or stern end.

6. Ship according to one or more of the previous claims, wherein the protuberance (10) is positioned astride the stem.

7. Ship according to one or more of the previous claims, wherein the two branches (10a, 10b) of the protuberance (10) connect to each other at bow or stern at the centreline of the ship (1).

8. Ship according to claim 7, wherein the two branches (10a, 10b) of the protuberance (10) project at least in relation to the base of the stem or of the stern-post.

9. Ship according to one or more of the previous claims, wherein the hull (2) comprises centrally a section of cylindrical body (9), at which the ship (1) has its maximum extension in width, and wherein the two branches (10a, 10b) of the protuberance (10) extend in a longitudinal direction as far as said section of cylindrical body (9).

10. Ship according to claim 9, each branch (10a,10b) of the protuberance (10) connects to the cylindrical cross-section body (9).

11. Ship according to one or more of the previous claims, comprising a double bottom (14), the protuberance (10) being connected to said double bottom (14).

12. Ship according to one or more of the previous claims, comprising a first protuberance (10') at the bow and a second protuberance (10'') at the stern.

13. Ship according to claim 12, wherein said first (10') and said second protuberance (10'') are identical.

14. Ship according to one or more of the previous claims, **characterised by** the fact of being a drillship, a pipe-laying ship or an offshore production ship.

## Patentansprüche

1. Schiff für Langzeitstationierung auf See, umfassend einen Rumpf (2), der sich entlang einer Längsachse (X) zwischen einem Bug (3) und einem Heck (4) erstreckt, **gekennzeichnet durch** die Tatsache, dass der Rumpf (2) zumindest eine Ausstülpung (10) mit einer abgeflachten Form umfasst, die einen Bord bildet, der sich von dem Rumpf in Richtung der Breite des Schiffes erstreckt, wobei die Ausstülpung an dem Bug oder an dem Heck positioniert ist und sich in einer Längsrichtung rittlings des Bugs oder des Hecks des Schiffes (1) zu dem Mittelschiff hin erstreckt, und zwar teilweise umgebend bzw. umfassend den vorderen oder hinteren Teil des Rumpfes auf beiden Seiten (5, 6) mit zwei separaten Zweigen (10a, 10b), wobei jeder Zweig (10a, 10b) der Ausstülpung (10) eine vordefinierte Breite (W) in der Richtung der Breite des Schiffes (1) aufweist, wobei die Breite (W) in dem Maße zunimmt, wie sie sich zu dem Bug- und Heckende hin bewegt, wobei die Ausstülpung (10) in Bezug auf den Rumpf positioniert ist (2), um sich immer unter der Wasserlinie (B) des Schiffes zu befinden und den Bewegungen in vertikaler Richtung des Schiffes (1) auf See, die durch den Wellengang erzeugt werden, Widerstand entgegenzubringen, wodurch die Stampf- und Tauchbewegungen gedämpft werden.

2. Schiff nach Anspruch 1, wobei der höchste Teil der Ausstülpung (10) nicht weniger als 5 Meter unter der Wasserlinie (B) des Schiffes ist.

3. Schiff nach Anspruch 1 oder 2, wobei die Ausstülpung (10) eine obere Fläche bzw. Oberfläche (11), die im Wesentlichen nach oben gewandt ist, und eine untere Fläche bzw. Oberfläche (12) definiert, die im Wesentlichen nach unten gewandt ist.

4. Schiff nach Anspruch 3, wobei die Ausstülpung (10) eine abgerundete Fläche bzw. Oberfläche (13) aufweist, die die obere Fläche (11) mit der unteren Fläche (12) verbindet.

5. Schiff nach Anspruch 3, wobei die Ausstülpung (10) eine vordefinierte Höhe (H) aufweist, die zwischen der oberen Fläche (11) und der unteren Fläche (12) umfasst ist bzw. liegt, und wobei die Höhe (H) der Ausstülpung (10) in dem Maße zunimmt, wie sie sich zu dem Bug- und Heckende hin bewegt.

6. Schiff nach einem oder mehreren der vorhergehenden Ansprüche, wobei die Ausstülpung (10) rittlings des Stevens positioniert ist.

7. Schiff nach einem oder mehreren der vorhergehenden Ansprüche, wobei die beiden Zweige (10a, 10b) der Ausstülpung (10) an Bug oder Heck an der Mittellinie des Schiffes (1) miteinander verbunden sind.

8. Schiff nach Anspruch 7, wobei die beiden Zweige (10a, 10b) der Ausstülpung (10) zumindest in Bezug auf die Basis des Stevens oder des Achterstevens vorstehen.

9. Schiff nach einem oder mehreren der vorhergehenden Ansprüche, wobei der Rumpf (2) mittig einen Abschnitt eines zylindrischen Körpers (9) umfasst, an dem das Schiff (1) seine maximale Ausdehnung in der Breite aufweist, und wobei sich die beiden Zweige (10a, 10b) der Ausstülpung (10) in einer Längsrichtung bis zu dem Abschnitt des zylindrischen Körpers (9) erstrecken.

10. Schiff nach Anspruch 9, wobei jeder Zweig (10a, 10b) der Ausstülpung (10) mit dem Körper (9) mit zylindrischem Querschnitt verbunden ist.

11. Schiff nach einem oder mehreren der vorhergehenden Ansprüche, umfassend einen Doppelboden (14), wobei die Ausstülpung (10) mit dem Doppelboden (14) verbunden ist.

12. Schiff nach einem oder mehreren der vorhergehenden Ansprüche, umfassend eine erste Ausstülpung (10') an dem Bug und eine zweite Ausstülpung (10") an dem Heck.

13. Schiff nach Anspruch 12, wobei die erste (10') und die zweite Ausstülpung (10") identisch sind.

14. Schiff nach einem oder mehreren der vorhergehenden Ansprüche, **gekennzeichnet durch** die Tatsache, dass es sich um ein Bohrschiff, ein Rohrlegerschiff oder ein Offshore-Produktionsschiff handelt.

## Revendications

1. Navire destiné à maintenir sa position en mer sur une longue durée, comprenant une coque (2) qui s'étend le long d'un axe longitudinal (X) entre une proue (3) et une poupe (4), **caractérisé en ce que** la coque (2) comprend au moins une protubérance (10) ayant une forme aplatie qui forme une saillie s'étendant depuis la coque dans la direction de la largeur du navire, ladite protubérance étant positionnée au niveau de la proue ou au niveau de la poupe et s'étendant dans une direction longitudinale à cheval sur la proue ou la poupe du navire (1) en direction du milieu du navire, englobant au moins partiellement la partie avant ou la partie arrière de la coque des deux côtés (5, 6) avec deux ramifications séparées (10a, 10b), chaque ramification (10a, 10b) de la protubérance (10) ayant une largeur prédéfinie (W) dans la direction de la largeur du navire (1), dans lequel ladite largeur (W) augmente à mesure qu'elle évolue en direction de l'extrémité proue ou poupe,
ladite protubérance (10) étant positionnée par rapport à la coque (2) de manière à toujours être sous la ligne de flottaison (B) du navire et opposant une résistance aux mouvements dans la direction verticale du navire (1) en mer générés par la houle, amortissant ainsi les mouvements de tangage et de pilonnement.

2. Navire selon la revendication 1, dans lequel la partie la plus haute de la protubérance (10) est au moins supérieure ou égale à 5 mètres sous la ligne de flottaison (B) du navire.

3. Navire selon la revendication 1 ou 2, dans lequel ladite protubérance (10) définit une surface supérieure (11), qui est sensiblement orientée vers le haut, et une surface inférieure (12), qui est sensiblement orientée vers le bas.

4. Navire selon la revendication 3, la protubérance (10) a une surface arrondie (13) qui relie la surface supérieure (11) à la surface inférieure (12).

5. Navire selon la revendication 3, dans lequel la protubérance (10) a une hauteur prédéfinie (H) comprise entre la surface supérieure (11) et la surface inférieure (12) et dans lequel la hauteur (H) de la protubérance (10) augmente à mesure qu'elle évolue vers l'extrémité proue ou poupe.

6. Navire selon l'une quelconque des revendications précédentes, dans lequel la protubérance (10) est positionnée à cheval sur l'étrave.

7. Navire selon l'une quelconque des revendications précédentes, dans lequel les deux ramifications (10a, 10b) de la protubérance (10) sont mutuellement reliées au niveau de la proue ou de la poupe au niveau de la ligne de quille du navire (1).

8. Navire selon la revendication 7, dans lequel les deux ramifications (10a, 10b) de la protubérance (10) font saillie au moins par rapport à la base de l'étrave ou de l'étambot.

9. Navire selon l'une quelconque des revendications précédentes, dans lequel la coque (2) comprend en son centre une section de corps cylindrique (9), au niveau de laquelle le navire (1) a son extension maximale en largeur, et dans lequel les deux ramifications (10a, 10b) de la protubérance (10) s'étendent dans une direction longitudinale jusqu'à ladite section de corps cylindrique (9).

10. Navire selon la revendication 9, chaque ramification (10a, 10b) de la protubérance (10) est reliée au corps de section transversale cylindrique (9).

11. Navire selon l'une quelconque des revendications précédentes, comprenant un double fond (14), la protubérance (10) étant reliée audit double fond (14).

12. Navire selon l'une quelconque des revendications précédentes, comprenant une première protubérance (10') au niveau de la proue et une deuxième protubérance (10") au niveau de la poupe.

13. Navire selon la revendication 12, dans lequel ladite première protubérance (10') et ladite deuxième protubérance (10") sont identiques.

14. Navire selon l'une quelconque des revendications précédentes, **caractérisé en ce qu'**il est du type navire de forage, navire de pose de pipeline, ou navire de production en mer.
